# EUROPÄISCHE PATENTSCHRIFT

(11) **EP 2 203 823 B1**
(45) Veröffentlichungstag und Bekanntmachung des Hinweises auf die Patenterteilung: **25.05.2011**
(21) Anmeldenummer: 08803965.6
(22) Anmeldetag: 10.09.2008
(51) Int. Cl.: G06F 11/267

(54) **VERFAHREN ZUM TESTEN EINES ADRESSBUSSES IN EINEM LOGISCHEN BAUSTEIN**
METHOD FOR TESTING AN ADDRESS BUS IN A LOGIC MODULE
PROCÉDÉ DE TEST D'UN BUS D'ADRESSES DANS UN MODULE LOGIQUE

(30) Priorität: 15.10.2007 DE 102007049354
(43) Veröffentlichungstag der Anmeldung: 07.07.2010
(73) Patentinhaber: Robert Bosch GmbH, 70442 Stuttgart (DE)
(72) Erfinder: SCHNEIDER, Thomas, 71706 Markgroeningen (DE); WIRTH, Peter, 68753 Waghaeusel (DE); PFITZER, Otto, 72820 Sonnenbuehl (DE)
(86) Internationale Anmeldenummer: PCT/EP2008/061998
(87) Internationale Veröffentlichungsnummer: WO 2009/049970

(56) Entgegenhaltungen:
- DE-A1- 10 226 876
- JP-A- 9 016 483
- US-A- 5 436 856

## Beschreibung

Die Erfindung betrifft ein Verfahren zum Testen eines Adressbusses in einem logischen Baustein, einen solchen logischen Baustein, ein Computerprogramm und ein Computerprogrammprodukt.

### Stand der Technik

In logischen elektronischen Bausteinen, wie bspw. anwendungsspezifischen integrierten Schaltungen (ASIC: application specific integrated circuit), werden zur Kommunikation zwischen den einzelnen Komponenten Datenleitungen bzw. Busse eingesetzt. Typischerweise ist in einem ASIC ein Mikroprozessor oder auch Mikrocontroller mit mehreren Elementen, wie bspw. einem Speicher und mehreren Ein-Ausgabeeinheiten, verbunden, wobei für die Übertragung der eigentlichen Daten ein Datenbus vorgesehen ist. Zur Ansteuerung der einzelnen Komponenten oder auch von Speicherbereichen in dem Speicher ist ein Adressbus vorgesehen, der lediglich Speicheradressen überträgt. Zur Erzeugung der benötigten Adresssignale ist üblicherweise ein Adressdecoder vorgesehen, so dass mit den Adresssignalen an den Mikroprozessor angeschlossene Elemente direkt angesteuert bzw. angesprochen werden können.

Zur Überprüfung der Funktionsfähigkeit der einzelnen Elemente des logischen Bausteins sind unter anderem Adressbus-Tests vorgesehen, bei denen Speicherareale in dem Speicher beschrieben werden, um die Funktionalität von Verbindungsleitungen zu prüfen. Dabei werden an allen Speicherstellen Werte geschrieben und das Vorhandensein aller geschriebenen Werte geprüft. Bei einem 1 kb großen Speicherbereich schreibt man somit 1.024 Zahlen und prüft jede Zahl einzeln ab. Fehlt eine oder fehlen mehrere Zahlen, ist die Adressbusverbindung defekt.

Zur Überprüfung des Datenbusses ist es üblicherweise vorgesehen, dass mehrere vordefinierte Werte in ein Datenregister geschrieben werden und diese zurückgelesen werden. Bei voller Funktionalität ist das Schreiben und Lesen jedes Werts möglich, in diesem Fall bei 16-Bit Breite sind dies 65.535 Werte.

Zur Gewährleistung der Funktionalität und Integrität des Adressbusses in einem ASIC muss ein ähnlicher Test durchgeführt werden. Hierbei ist allerdings zu beachten, dass durch Beschreiben von Registern im ASIC unerwünscht Funktionen ausgelöst werden können. So können bei einem Testzugriff nicht plausible oder rechtlich nicht abgesicherte Reaktionen ausgelöst werden.

Aus der US 5436856 ist ein selbsttestendes Computer-System mit Testregister aufweisenden Schaltkreisen bekannt. Die Schrift offenbart ein Testverfahren für einen Schaltkreis zwischen einem Mikroprozessor und umgebenden Schaltkreisen. Dabei weist ein Adressdecoder-Schaltkreis ein zusätzliches Testregister auf.

### Offenbarung der Erfindung

Das erfindungsgemäße Verfahren dient zum Testen eines Adressbusses in einem logischen Baustein, wobei in dem logischen Baustein mindestens ein Datenregister vorgesehen ist, in das mindestens durch einen Adressdecoder eine von dem Adressdecoder bei einem Zugriff erkannte Adresse übertragen bzw. geschrieben wird, die zur Überprüfung der Funktionalität des Adressbusses ausgelesen wird.

Dabei bietet es sich an, wenn die bei einem Zugriff von dem Adressdecoder erkannte Adresse, die in das Datenregister geschrieben wurde, bei einem nächsten Zugriff, typischerweise der direkt anschließend folgende Zugriff, ausgelesen wird. Der ausgelesene Wert ermöglicht die Überprüfung, ob der Adressdecoder die richtige Adresse erkannt bzw. gelesen hat. Der Datenbus wird in Ausgestaltung durch Beschreiben einer vorzugsweise unkritischen Speicherstelle im logischen Baustein mit Standardwerten getestet.

Das Verfahren, insbesondere das Übertragen der bei einem Zugriff erkannten Adressen, kann bei einem Lesezugriff oder einem Schreibzugriff erfolgen. Es bietet sich an, dass vorgestellte Verfahren bei der Überprüfung von Leiterbahnen einzusetzen.

Der erfindungsgemäße logische Baustein ist insbesondere dazu ausgestaltet, das vorstehend beschriebene Verfahren durchzuführen, und weist mindestens ein Datenregister auf, in das von dem Adressdecoder erkannte Adressen übertragen bzw. geschrieben werden können, die zur Überprüfung der Funktionalität des Adressbusses ausgelesen werden können.

Als logischer Baustein kommt bspw. ein ASIC (application specific integrated circuit: anwendungsspezifische integrierte Schaltung) in Betracht, wie dieser z.B. zur Steuerung eines integrierten RADAR-Teils in einer aktiven Fahrsteuerung (acc: active cruise control) zum Einsatz kommt.

Das erfindungsgemäße Computerprogramm umfasst Programmcodemittel, um alle Schritte eines vorstehend beschriebenen Verfahrens durchzuführen, wenn das Computerprogramm auf einem Computer oder einer entsprechenden Recheneinheit, insbesondere in einem logischen Baustein der vorstehenden Art, ausgeführt wird.

Das erfindungsgemäße Computerprogrammprodukt umfasst eben diese Programmcodemittel, die auf einem computerlesbaren Datenträger gespeichert sind. Als Datenträger kommen dabei beliebige interne und externe Aufzeichnungsträger in Betracht.

Die Erfindung ermöglicht zumindest in ihren Ausgestaltungen einen nicht invasiven Test der Busverbindungen in einem logischen Baustein. Dabei bedeutet nicht invasiv, dass keine Daten in den logischen Baustein geschrieben werden, um den Adressbus zu testen. Um den Test durchzuführen, wird innerhalb des logischen Bausteins, in einem Fall innerhalb des ASIC, ein Datenregister (PREVIOUS_ADDRESS) integriert, das die Adresse des zuletzt durchgeführten Schreib- oder Lesezugriffs enthält. Dies wird dadurch erreicht, dass die von dem Adressdecoder erkannte Adresse in das Datenregister übertragen bzw. transferiert wird. Der Inhalt des Datenregisters kann dann beim nächsten Lesezugriff ausgelesen werden.

Durch Auslesen jeder Adresse kann verifiziert werden, ob der Adressdecoder die richtige Adresse gelesen hat. Dies wird durch Auslesen des Datenregisters PREVIOUS_ADDRESS nach dem Lesen erreicht.

Somit wird ein Testwert, der auf den Adressbus gelegt wird, auf den Datenbus "gespiegelt". Der Datenbus wird bspw. durch Beschreiben einer unkritischen Speicherstelle im ASIC mit Standardwerten getestet. Folglich wird die Integrität des Adressbusses über die Integrität des Datenbusses nachgewiesen.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in den Zeichnungen schematisch dargestellt und wird im folgenden unter Bezugnahme auf die Zeichnungen ausführlich beschrieben.

### Kurze Beschreibung der Zeichnungen

- Figur 1: zeigt in schematischer Darstellung eine mögliche Ausführungsform des erfin- dungsgemäßen logischen Bausteins.
- Figur 2: zeigt den logischen Baustein aus Figur 1 zur Verdeutlichung des Prinzips des erfindungsgemäßen Verfahrens.
- Figur 3: zeigt in einem Flussdiagramm eine mögliche Ausführung des erfindungsgemä- ßen Verfahrens.

### Ausführungsformen der Erfindung

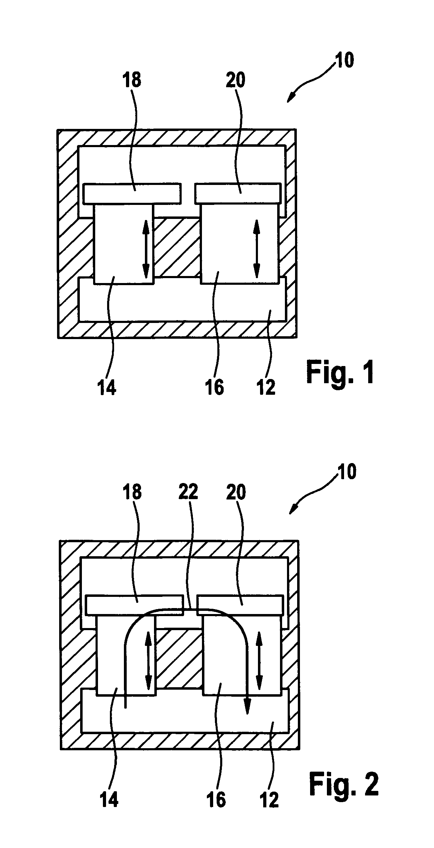

In Figur 1 ist in schematischer Darstellung eine Platine dargestellt, die insgesamt mit der Bezugsziffer 5 bezeichnet ist. Diese Platine 5 trägt einen als ASIC ausgebildeten logischen Baustein 10, einen Mikrocontroller 12, einen Adressbus 14, einen Datenbus 16, einen Adressdecoder 18 und ein Datenregister 20. Der logische Baustein 10 dient dazu, ein integriertes Radarteil in einem ACC (active cruise control: aktive Fahrsteuerung) zu steuern.

Über den Adressbus 18 kann der Mikrocontroller 12 bestimmte Speicherbereiche ansprechen, wobei eine Übertragung der Daten über den Datenbus 16 erfolgt.

Das beschriebene Verfahren wird nunmehr anhand Figur 2 erläutert, in der ebenfalls die Platine 5 mit dem logischen Baustein 10, dem Mikrocontroller 12, dem Adressbus 14, dem Datenbus 16, dem Adressdecoder 18 und dem Datenregister 20 dargestellt ist.

Bei einem Zugriff durch den Mikrocontroller 12 auf eine Komponente bzw. einen Speicherbereich innerhalb des logischen Bausteins 10 generiert der Adressdecoder 18 ein Adresssignal bzw. Adresssignale anhand der erkannten Adresse und überträgt diese erkannte Adresse zusätzlich in das Datenregister 20. Dieses Datenregister 20 kann nunmehr, bspw. bei dem nächsten Lesezugriff, ausgelesen werden, so dass verifiziert werden kann, ob der Adressdecoder 18 die richtige Adresse erkannt bzw. gelesen hat. Auf diese Weise wird ein Testwert, der auf den Adressbus 14 gelegt wird, auf den Datenbus 16 gespiegelt, wie mit Pfeil 22 verdeutlicht ist, der den Weg eines Testwerts beschreibt. Mit dem Test kann die Funktionsweise des Adressbusses 14 überprüft werden.

Der Datenbus 16 wird durch Beschreiben einer unkritischen Speicherstelle im logischen Baustein 10 mit Standardwerten getestet, so dass die Integrität des Adressbusses 14 über die Integrität des Datenbusses 16 nachgewiesen werden kann.

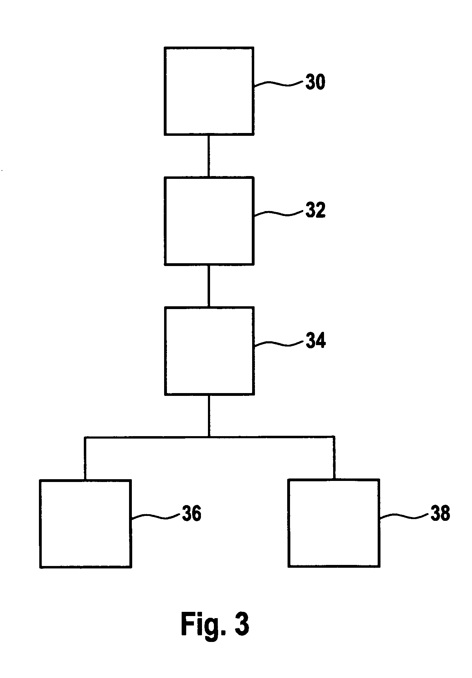

In Figur 3 ist in einem Flussdiagramm eine mögliche Ausführung des erfindungsgemäßen Verfahrens verdeutlicht.

In einem ersten Schritt 30 erfolgt in einem logischen Baustein von einer Recheneinheit ein Zugriff auf einen Speicherbereich in einem Speicher des logischen Bausteins. Dabei erfolgt eine Adressierung des anzusteuernden Speicherbereichs durch einen Adressdecoder, der wiederum in einem nächsten Schritt 32 die erkannte Adresse in ein Datenregister schreibt. In einem nächsten Lesezugriff in einem Schritt 34 wird dieses Adressregister ausgelesen und typischerweise nach Testen des Datenbusses festgestellt, ob die Integrität des Adressbusses gegeben ist (Block 36) oder nicht gegeben ist (Block 38).

Die Integrität des Adressbusses wird somit über die Integrität des Datenbusses nachgewiesen, wobei ein Testwert, der auf den Adressbus gelegt wird, auf den Datenbus gespiegelt wird.

Das beschriebene Verfahren bietet sich insbesondere bei logischen Bausteinen, wie bspw. ASIC, an, bei denen herkömmliche Adressbus-Tests, bei denen Speicherareale beschrieben werden und das Vorhandensein der geschriebenen Werte überprüft wird, zu unerwünschten Funktionen führen können. Dies wird bei dem erfindungsgemäßen, nicht invasiven Testverfahren vermieden.

## Patentansprüche

1. Verfahren zum Testen eines Adressbusses (14) in einem logischen Baustein (10), bei dem in dem logischen Baustein (10) mindestens ein Datenregister (20) vorgesehen ist, **dadurch gekennzeichnet, dass** in das Datenregister (20) durch einen Adressdecoder (18) mindestens eine von dem Adressdecoder (18) bei einem Zugriff erkannte Adresse geschrieben wird, die zur Überprüfung der Funktionalität des Adressbusses (14) ausgelesen wird.

2. Verfahren nach Anspruch 1, bei dem das Datenregister (20) bei einem nächsten Lesezugriff ausgelesen wird.

3. Verfahren nach Anspruch 1 oder 2, bei dem zusätzlich ein Datenbus (16) durch Beschreiben einer Speicherstelle in dem logischen Baustein (10) mit Standardwerten getestet wird.

4. Verfahren nach einem der Ansprüche 1 bis 3, das bei einem Lesezugriff durchgeführt wird.

5. Verfahren nach einem der Ansprüche 1 bis 3, das bei einem Schreibzugriff durchgeführt wird.

6. Verfahren nach einem der Ansprüche 1 bis 5, das zur Überprüfung von Leiterbahnen eingesetzt wird.

7. Logischer Baustein, insbesondere zur Durchführung eines Verfahrens nach einem der Ansprüche 1 bis 6, bei dem mindestens ein Datenregister (20) vorgesehen ist, **dadurch gekennzeichnet, dass** der logische Baustein Mittel aufweist, in das Datenregister (20) durch einen Adressdecoder (18) mindestens eine von dem Adressdecoder (18) erkannte Adresse zu schreiben, sowie Mittel aufweist, die Adresse zur Überprüfung der Funktionalität des Adressbusses (14) auszulesen.

8. Logischer Baustein nach Anspruch 7, der als ASIC ausgebildet ist.

9. Computerprogramm mit Programmcodemitteln, um alle Schritte eines Verfahrens nach einem der Ansprüche 1 bis 6 durchzuführen, wenn das Computerprogramm auf einem Computer oder einer entsprechenden Recheneinheit, insbesondere in einem logischen Baustein (10) nach Anspruch 7, ausgeführt wird.

10. Computerprogrammprodukt mit Programmcodemitteln, die auf einem computerlesbaren Datenträger gespeichert sind, um alle Schritte eines Verfahrens nach einem der Ansprüche 1 bis 6 durchzuführen, wenn das Computerprogramm auf einem Computer oder einer entsprechenden Recheneinheit, insbesondere in einem logischen Baustein (10) nach Anspruch 7, ausgeführt wird.

## Claims

1. Method for testing an address bus (14) in a logic chip (10), in which the logic chip (10) contains at least one data register (20), **characterized in that** an address decoder (18) writes to the data register (20) at least one address which is recognized by the address decoder (18) during an access operation and which is read for the purpose of checking the functionality of the address bus (14).

2. Method according to Claim 1, in which the data register (20) is read during a subsequent read access operation.

3. Method according to Claim 1 or 2, in which additionally a data bus (16) is tested by writing standard values to a memory location in the logic chip (10).

4. Method according to one of Claims 1 to 3, which is performed during a read access operation.

5. Method according to one of Claims 1 to 3, which is performed during a write access operation.

6. Method according to one of Claims 1 to 5, which is used for the purpose of checking interconnects.

7. Logic chip, particularly for performing a method according to one of Claims 1 to 6, in which at least one data register (20) is provided, **characterized in that** the logic chip has means for an address decoder (18) to write to the data register (20) at least one address which is recognized by the address decoder (18), and has means for reading the address for the purpose of checking the functionality of the address bus (14).

8. Logic chip according Claim 7, which is in the form of an ASIC.

9. Computer program having program code means in order to perform all the steps of a method according to one of Claims 1 to 6 when the computer program is executed on a computer or an appropriate computation unit, particularly in a logic chip (10) according to Claim 7.

10. Computer program product having program code means which are stored on a computer-readable data storage medium in order to perform all the steps of a method according to one of Claims 1 to 6 when the computer program is executed on a computer or an appropriate computation unit, particularly in a logic chip (10) according to Claim 7.

## Revendications

1. Procédé pour tester un bus d'adresses (14) dans un module logique (10), au moins un registre de données (20) étant prévu dans le module logique (10), **caractérisé en ce que**
au moins une adresse reconnue par un décodeur d'adresses (18) lors d'un accès est écrite dans le registre de données (20) par le décodeur d'adresses (18) et est lue pour vérifier le bon fonctionnement du bus d'adresses (14).

2. Procédé selon la revendication 1, dans lequel le registre de données (20) est lu lors de l'accès de lecture suivant.

3. Procédé selon les revendications 1 ou 2, dans lequel un bus de données (16) est de plus testé avec des valeurs normalisées par inscription dans un emplacement de mémoire dans le module logique (10).

4. Procédé selon l'une des revendications 1 à 3, exécuté lors d'un accès de lecture.

5. Procédé selon l'une des revendications 1 à 3, exécuté lors d'un accès d'écriture.

6. Procédé selon l'une des revendications 1 à 5, utilisé pour vérifier des pistes conductrices.

7. Module logique, en particulier destiné à exécuter un procédé selon l'une des revendications 1 à 6 et dans lequel au moins un registre de données (20) est prévu, **caractérisé en ce que**
le module logique présente des moyens pour faire écrire par un décodeur d'adresses (18) dans le registre de données (20) au moins une adresse reconnue par le décodeur d'adresses (18) ainsi que des moyens qui lisent l'adresse en vue de vérifier le bon fonctionnement du bus d'adresses (14).

8. Module logique selon la revendication 7, configuré comme ASIC.

9. Programme informatique doté de moyens de code de programme en vue d'exécuter toutes les étapes d'un procédé selon l'une des revendications 1 à 6, lorsque le programme informatique est exécuté sur un ordinateur ou une unité de calcul appropriée et en particulier dans un module logique (10) selon la revendication 7.

10. Produit de programme informatique doté de moyens de code de programme qui peuvent être conservés sur un support de données lisible par ordinateur et en vue d'exécuter toutes les étapes d'un procédé selon l'une des revendications 1 à 6 lorsque le programme informatique est exécuté sur un ordinateur ou une unité de calcul appropriée et en particulier dans un module logique (10) selon la revendication 7.
